# EUROPÄISCHE PATENTSCHRIFT

(11) **EP 3 452 214 B1**
(45) Veröffentlichungstag und Bekanntmachung des Hinweises auf die Patenterteilung: **23.11.2022**
(21) Anmeldenummer: 17723648.6
(22) Anmeldetag: 02.05.2017
(51) Int. Cl.: B01J 23/63, B01J 35/00, B01J 37/02, B01D 53/94, B01J 35/04

(54) **DREI-ZONEN-DIESELOXIDATIONSKATALYSATOR**
TRIPLE-ZONED DIESEL OXIDATION CATALYST
CATALYSEUR D'OXIDATION DE DIESEL À TROIS ZONES

(30) Priorität: 02.05.2016 DE 102016207484
(43) Veröffentlichungstag der Anmeldung: 13.03.2019
(73) Patentinhaber: Umicore AG & Co. KG, 63457 Hanau-Wolfgang (DE)
(72) Erfinder: HENGST, Christoph, 35510 Butzbach (DE); DORNHAUS, Franz, Kobe Hyogo 658-0063 (JP); SCHIFFER, Michael, 63450 Hanau (DE)
(86) Internationale Anmeldenummer: PCT/EP2017/060350
(87) Internationale Veröffentlichungsnummer: WO 2017/191099

(56) Entgegenhaltungen:
- EP-A1- 1 974 809
- DE-A1-102012 025 746
- DE-T5-112013 006 665
- US-A1- 2003 061 860
- US-A1- 2015 266 014
- US-B2- 8 007 750

## Beschreibung

Die vorliegende Erfindung betrifft einen Oxidationskatalysator zur Reinigung der Abgase von Dieselmotoren.

Das Rohabgas von Dieselmotoren enthält neben Kohlenmonoxid CO, Kohlenwasserstoffen HC und Stickoxiden NOₓ einen relativ hohen Sauerstoffgehalt von bis zu 15 Vol.-%. Außerdem sind Partikelemissionen enthalten, die überwiegend aus Rußrückständen und gegebenenfalls organischen Agglomeraten bestehen und aus einer partiell unvollständigen Kraftstoffverbrennung im Zylinder herrühren.

Während zur Entfernung der Partikelemissionen Dieselpartikelfilter mit und ohne katalytisch aktive Beschichtung geeignet sind und Stickoxide beispielsweise durch selektive katalytische Reduktion (Selective Catalytic Reduction SCR) an einem sogenannten SCR-Katalysator zu Stickstoff umgesetzt werden können, werden Kohlenmonoxid und Kohlenwasserstoffe durch Oxidation an einem geeigneten Oxidationskatalysator unschädlich gemacht.

Oxidationskatalysatoren sind in der Literatur umfangreich beschrieben. Es handelt sich dabei beispielsweise um sogenannte Durchflusssubstrate aus Keramik oder Metall, die als wesentliche katalytisch aktive Bestandteile Edelmetalle, wie Platin und Palladium, auf hochoberflächigen, porösen, hochschmelzenden Oxiden, beispielsweise Aluminiumoxid, tragen. Es sind auch bereits zonierte Oxidationskatalysatoren beschrieben, die in Fließrichtung des Abgases Materialzonen unterschiedlicher Zusammensetzung aufweisen, mit denen das Abgas nacheinander in Kontakt tritt.

So beschreiben US2010/257843, US2011/099975, WO2006/021337 A1 und WO2012/079598 A1 zonierte Oxidationskatalysatoren, die Platin und Palladium enthalten. Auch die WO2011/057649 beschreibt Oxidationskatalysatoren, wobei diese in gelayerten und gezonten Ausführungsformen verwendet werden können. Im Falle der gezonten Ausführungsformen weist die zweite Zone, d.h. die Zone mit denen das abströmende Abgas in direktem Kontakt steht, einen höheren Edelmetallgehalt auf, als die vordere Zone, die mit dem einströmenden Abgas in direktem Kontakt steht. Die Oxidations-katalysatoren gemäß WO2011/057649 haben insbesondere die Aufgabe, für einen abströmseitigen SCR-Katalysator ein optimales Verhältnis von NO zu NO₂ einzustellen.

Die EP2000639A1 beschreibt Oxidationskatalysatoren, die neben Platin ein Oxid eines Metalls enthalten, das ausgewählt ist aus Magnesium, Erdalkalimetall und Alkalimetall. Der Katalysator hat die Funktion, die Abgastemperatur bei Kraftstoffeinspritzung zu erhöhen.

Die WO2013/088133 beschreibt einen gezonten Katalysator, der in der anströmseitigen Zone Platin und in der abströmseitigen Zone ein Metalloxid enthält, das flüchtiges Platin zu binden vermag. Der Katalysator soll dem in SAE 2009-01-0627 beschriebenen Phänomen entgegenwirken, wonach Platin-haltige Katalysatoren bei hohen Temperaturen kleine Mengen Platinspezies in die Gasphase abgeben können, die wiederum die Wirksamkeit eines abströmseitigen SCR-Katalysators negativ beeinflussen. Als Metalloxide werden stabilisiertes Aluminiumoxid, amorphes Aluminium/Siliziumoxid, optional stabilisiertes Zirkoniumoxid, Ceroxid, Titanoxid, optional stabilisiertes Cer/Zirkonium-Mischoxid, sowie Mischungen der genannten Materialien offenbart. Sie werden in Mengen von 0,1 bis 5 g/in³ (6,1 to 305 g/l) eingesetzt.

US 2015/266014 A1 offenbart einen mehrschichtigen Abgasbehandlungskatalysator. US 2003/061860 A1 offenbart einen zonierten Abgasbehandlungskatalysator.

Die Abgastemperaturen gegenwärtiger und zukünftiger Dieselmotoren der Abgasgesetzgebung Euro 5, 6 und 6+ werden durch Kraftstoffeinsparungen zur Senkung des CO₂-Ausstosses immer niedriger. Umso wichtiger ist es, Dieseloxidationskatalysatoren zur Verfügung zu haben, die bei den niedrigen Abgastemperaturen einen ausreichenden CO-Light Off aufweisen. Die bisher bekannten Dieseloxidationskatalysatoren erfüllen diese Bedingung nicht in ausreichendem Maße, so dass Bedarf nach entsprechender Weiterentwicklung besteht.

Es wurde nun festgestellt, dass die nachstehend beschriebenen und definierten Dieseloxidationskatalysatoren diese Bedingungen erfüllen.

Die vorliegende Erfindung betrifft einen Dieseloxidationskatalysator, der einen Tragkörper mit einer Länge L, die sich zwischen einer ersten Stirnfläche a und einer zweiten Stirnfläche b erstreckt und
auf dem Tragkörper angeordnete katalytisch aktive Materialzonen A, B und C umfasst, wobei
- Materialzone A Platin und Palladium in einem Gewichtsverhältnis Pt:Pd von ≤ 1 und ein Erdalkalimetall enthält und sich ausgehend von Stirnfläche a auf 20 bis 80% der Länge L erstreckt,
- Materialzone B Ceroxid enthält und frei von Platin ist und sich ausgehend von Stirnfläche b auf 20 bis 80% der Länge L erstreckt, und
- Materialzone C Platin oder Platin und Palladium in einem Gewichtsverhältnis Pt:Pd von ≥ 5 enthält, und
wobei weder Materialzone A, noch Materialzone C über Materialzone B angeordnet sind.

Sofern in Materialzone A Platin und Palladium vorliegen, so ist das Gewichtsverhältnis Pt:Pd ≤ 1. In Ausführungsformen der vorliegenden Erfindung ist das Gewichtsverhältnis Pt:Pd in Materialzone A beispielsweise 1 : 1 bis 1 :15.

Sofern in Materialzone C Platin und Palladium vorliegen, so ist das Gewichtsverhältnis Pt:Pd ≥ 5. In Ausführungsformen der vorliegenden Erfindung ist das Gewichtsverhältnis Pt:Pd in Materialzone C beispielsweise 5 : 1 bis 12 :1.

In Ausführungsformen des erfindungsgemäßen Oxidationskatalysators sind Platin beziehungsweise Platin und Palladium in den Materialzonen A und C auf einem oder mehreren Trägeroxiden aufgebracht. Diese

Trägeroxide sind vorteilhafterweise hochschmelzend, d.h. ihr Schmelzpunkt liegt mit ausreichendem Abstand über den beim bestimmungsgemäßen Betrieb des erfindungsgemäßen Oxidationskatalysators auftretenden Temperaturen. Die Trägeroxide sind außerdem vorteilhafterweise hochoberflächig und weisen bevorzugt spezifische Oberflächen von 50 bis 200 m²/g auf.

Die Trägeroxide in den Materialzonen A und C können gleich oder verschieden sein.

Geeignete Trägeroxide sind ausgewählt sind aus der Reihe bestehend aus Aluminiumoxid, dotiertes Aluminiumoxid, Siliziumoxid, Titandioxid und Mischoxiden aus einem oder mehreren davon.

Dotierte Aluminiumoxide sind beispielsweise Zirkoniumoxid- und/oder Titanoxid-dotierte Aluminiumoxide. Mit Vorteil wird Lanthan-stabilisiertes Aluminiumoxid eingesetzt, wobei Lanthan in Mengen von 1 bis 10 Gew.-%, bevorzugt 3 bis 6 Gew.-%, jeweils berechnet als La₂O₃ und bezogen auf das Gewicht des stabilisierten Aluminiumoxides, verwendet wird.

In Ausführungsformen des erfindungsgemäßen Oxidationskatalysators wird in Materialzone A als Erdalkalimetall Magnesium, Calcium, Strontium, Barium oder Mischungen von mindestens zwei dieser Metalle eingesetzt. Bevorzugt werden Strontium oder Barium eingesetzt.

Das Erdalkalimetall wird mit Vorteil in einer Menge von 0,5 bis 5 Gew.-%, bezogen auf das Gewicht der Materialzone A, verwendet.

Wird Strontium verwendet, so liegt es besonders bevorzugt in einer Menge von 1 bis 3 Gew.-%, bezogen auf das Gewicht der Materialzone A, vor. Wird dagegen Barium verwendet, so liegt es besonders bevorzugt in einer Menge von 2,5 bis 4,5 Gew.-%, bezogen auf das Gewicht der Materialzone A, vor.

In Ausführungsformen des erfindungsgemäßen Oxidationskatalysators ist in Materialzone B das Ceroxid teilweise durch Aluminiumoxid ersetzt. Es können Mischungen aus Ceroxid und Aluminiumoxid eingesetzt werden, die Aluminiumoxid in Mengen von 10 bis 90 Gew.-%, bezogen auf das Gewicht der Mischung aus Aluminiumoxid und Ceroxid, enthalten.

Als Ceroxid wird bevorzugt reines Ceroxid eingesetzt, das heißt Ceroxid mit einem Ceroxid-Gehalt von 80 bis 100 Gew.-%.

Als Aluminiumoxid können die üblichen hochoberflächigen Aluminiumoxide dienen, wie sie auch als Trägeroxide in den Materialschichten A und C verwendet werden.

In weiteren Ausführungsformen des erfindungsgemäßen Oxidationskatalysators enthält die Materialzone B Palladium. Bevorzugte Mengen des Palladiums sind 0,01 bis 5 Gew.-%, bevorzugt 2 bis 4 Gew.-%, bezogen auf das Gewicht der Materialzone B.

Das Palladium ist insbesondere auf dem in Materialzone B vorhandenen Ceroxid geträgert. Es kann aber auch ganz oder teilweise auf üblichen Trägeroxiden geträgert sein, wobei insbesondere die oben beschriebenen Trägeroxide für Platin und Palladium in den Materialzonen A und C, insbesondere auch Aluminiumoxid, in Frage kommen.

In Ausführungsformen des erfindungsgemäßen Oxidationskatalysators liegen die Materialzonen A und C unabhängig voneinander in Mengen von 50 bis 150 g/l, bezogen auf das Volumen des Tragkörpers, vor. Materialzone B liegt bevorzugt in Mengen von 50 bis 150 g/l, bezogen auf das Volumen des Tragkörpers, vor.

In Ausführungsformen des erfindungsgemäßen Oxidationskatalysators beträgt die Länge der Materialzone A 20 bis 70%, 40 bis 60% oder 45 bis 50% der Gesamtlänge L des Tragkörpers.

In weiteren Ausführungsformen des erfindungsgemäßen Oxidationskatalysators beträgt die Länge der Materialzone B 20 bis 70%, 40 bis 60% oder 45 bis 50% der Gesamtlänge L des Tragkörpers.

In Ausführungsformen des erfindungsgemäßen Oxidationskatalysators erstreckt sich die Materialzone C über die gesamte Länge L des Tragkörpers. Sie kann sich aber auch nur über einen Teil der Gesamtlänge L des Tragkörpers erstrecken, so etwa auf 20 bis 70%, 40 bis 60% oder 45 bis 50% der Gesamtlänge L des Tragkörpers.

In Ausführungsformen des erfindungsgemäßen Oxidationskatalysators sind die Materialzonen A und B auf Materialzone C angeordnet. Dabei erstreckt sich bevorzugt die Materialzone C über die gesamte Länge L des Tragkörpers, während sich die Materialzonen A und B jeweils über 40 bis 60% der Gesamtlänge L des Tragkörpers erstrecken. Dabei entspricht die Summe der Längen der Materialzonen A und B der Gesamtlänge L des Tragkörpers oder ist kleiner als diese.

Besonders bevorzugt erstrecken sich in diesen Ausführungsformen die Materialzonen A und B jeweils auf 50% und Materialzone C auf 100% der Länge L des Tragkörpers.

In Ausführungsformen des erfindungsgemäßen Oxidationskatalysators ist Materialzone C auf Materialzone A und Materialzone B auf Materialzone C angeordnet. Auch in diesem Falle erstreckt sich bevorzugt die Materialzone C über die gesamte Länge L des Tragkörpers, während sich die Materialzonen A und B jeweils über 40 bis 60% der Gesamtlänge L des Tragkörpers erstrecken. Dabei entspricht die Summe der Längen der Materialzonen A und B der Gesamtlänge L des Tragkörpers oder ist kleiner als diese.

Besonders bevorzugt erstrecken sich in diesen Ausführungsformen die Materialzonen A und B jeweils auf 50% und Materialzone C auf 100% der Länge L des Tragkörpers.

Erfindungsgemäße Oxidationskatalysatoren können dadurch hergestellt werden, dass geeignete Tragkörper in an sich bekannter Weise mittels Beschichtungssuspensionen, sogenannten Washcoats, beschichtet werden. Zur Herstellung einer Beschichtungssuspension zur Herstellung der Materialzonen A oder C werden beispielsweise die ausgewählten Trägeroxide in Wasser suspendiert. Sodann werden Platin und/oder Palladium unter Rühren in Form von geeigneten, wasserlöslichen Vorläuferverbindungen wie beispielsweise Palladiumnitrat oder Hexahydroxoplatinsäure zur Suspension hinzugegeben und gegebenenfalls durch Stellung des pH-Wertes und/oder durch Zugabe eines Hilfsreagenzes auf dem Trägermaterial fixiert. Alternativ dazu kann das Edelmetall auch in Analogie zu dem in der EP 1 101 528 A2 beschriebenen Verfahren auf das Trägermaterial appliziert werden.

Die so erhaltenen Suspensionen werden dann vermahlen und nach einem der herkömmlichen Beschichtungsverfahren auf den Tragkörper aufgebracht. Nach jedem Beschichtungsschritt erfolgt die Trocknung des beschichteten Teils im heißen Luftstrom und gegebenenfalls eine Kalzinierung.

Die oben genannten Vorläuferverbindungen und Hilfsreagenzien sind dem Fachmann geläufig.

Als Tragkörper kommen insbesondere sogenannte Wabenkörper aus Keramik, insbesondere Cordierit, oder aus Metall in Frage. Bevorzugt werden sogenannte Durchflusswabenkörper verwendet. Es sind aber auch Ausführungsformen denkbar, in denen Wandflussfilter als Tragkörper verwendet werden.

Die erfindungsgemäßen Dieseloxidationskatalysatoren eignen sich zur Reinigung der Abgase von Dieselmotoren, insbesondere hinsichtlich Kohlenmonoxid und Kohlenwasserstoffen.

Die vorliegende Erfindung betrifft somit auch ein Verfahren zur Behandlung von Dieselabgasen, das dadurch gekennzeichnet ist, dass das Dieselabgas über einen Dieseloxidationskatalysator wie oben beschrieben und definiert geleitet wird, wobei das Dieselabgas den bei Stirnfläche a in den Tragkörper ein- und bei Stirnfläche b aus dem Tragkörper ausfließt.

Die erfindungsgemäßen Dieseloxidationskatalysatoren werden insbesondere als Bestandteile von Abgasreinigungssystemen verwendet. Entsprechende Abgasreinigungssysteme umfassen neben einem erfindungsgemäßen Dieseloxidationskatalysator beispielsweise einen Dieselpartikelfilter und/oder einen Katalysator zur selektiven katalytischen Reduktion von Stickoxiden, wobei Dieselpartikelfilter und SCR-Katalysator üblicherweise dem erfindungsgemäßen Dieseloxidationskatalysator nachgeschaltet sind, also abströmseitig angeordnet sind. In einer Ausgestaltung des Abgasreinigungssystems ist der SCR-Katalysator auf dem Dieselpartikelfilter angeordnet.

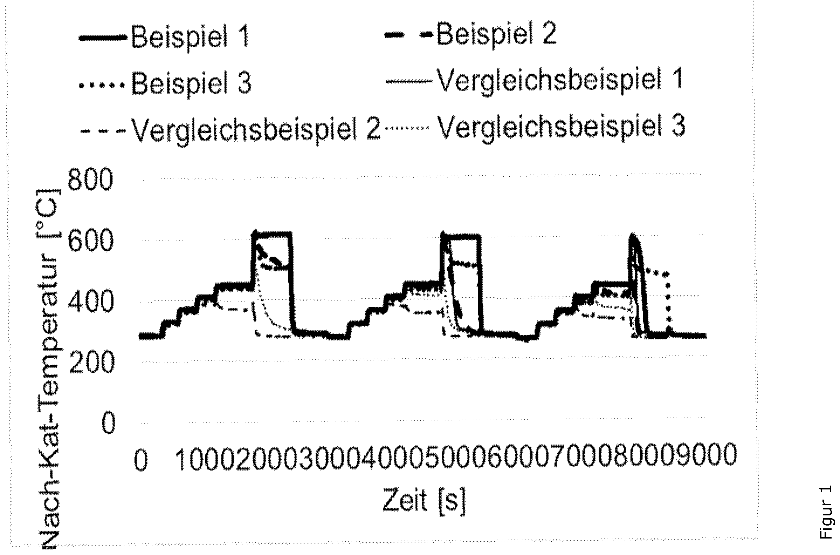

Figur 1 zeigt einen Vergleich des Heat up Verhaltens der Beispiele 1 bis 3 und der Vergleichsbeispiele 1 bis 3.

### Beispiel 1

a) Ein handelsübliches rundes Durchflusssubstrat aus Cordierit der Abmessungen 5,66"×4,00" (14,4 cm × 10,2 cm) mit der Zelligkeit 400 cpsi (62 cells/cm2) und der Wandstärke 6,5 mil (0,17 mm) wurde über seine gesamte Länge mit einem Washcoat beschichtet, der 49,23 g/L eines Lanthan-dotierten mesoporösen Aluminiumoxids, 0,60540 g/L einer üblichen wasserlöslichen Pt-Verbindung, sowie 0,10090 g/L einer üblichen wasserlöslichen Pd-Verbindug enthielt. Das Pt:Pd-Gewichtsverhältnis betrug 6:1.
b) Das gemäß a) erhaltene beschichtete Substrat wurde ausgehend von einem Ende (in den unten beschriebenen Tests einlassseitig) auf 50% seiner Länge mit einem Washcoat beschichtet, der 48,23 g/L eines handelsüblichen Lanthan-dotierten, Aluminiumoxids, 1,00 g/L Strontiumoxid (ex Sr(OH)2), 0,47086 g/L einer üblichen wasserlöslichen Pd-Verbindung, sowie 0,23543 g/L einer üblichen wasserlöslichen Pt- Verbindung enthielt. Das Pt:Pd-Gewichtsverhältnis betrug 1:2.
c) In einem weiteren Schritt wurde das gemäß b) erhaltene Substrat ausgehend vom anderen Ende (in den unten beschriebenen Tests auslassseitig) auf 50% seiner Länge mit einem Washcoat beschichtet, der 45 g/L eines handelsüblichen Aluminiumoxids und 5 g/L eines handelsüblichen Ceroxids enthielt.

### Vergleichsbeispiel 1

Beispiel 1 wurde wiederholt mit dem Unterschied, dass auf Schritt c) verzichtet wurde.

### Vergleichsbeispiel 2

Beispiel 1 wurde wiederholt mit dem Unterschied, dass auf Schritt b) verzichtet wurde.

### Vergleichsbeispiel 3

a) Ein handelsübliches Durchflusssubstrat aus Cordierit der Abmessungen 5,66"×4,00" (14,4 cm × 10,2 cm) mit der Zelligkeit 400 cpsi (62 cells/cm2) und der Wandstärke 6,5 mil (0,17 mm) wurde über seine gesamte Länge mit einem Washcoat beschichtet, der 73,85 g/L eines Lanthan-dotierten mesoporösen Aluminiumoxids, 0,90810 g/L einer üblichen wasserlöslichen Pt-Verbindung, sowie 0,15135 g/L einer üblichen wasserlöslichen Pd-verbindung enthielt. Das Pt:Pd-Gewichtsverhältnis betrug 6:1.
b) In einem weiteren Schritt wurde das gemäß a) erhaltene Substrat ausgehend von einem Ende (in den unten beschriebenen Tests auslassseitig) auf 50% seiner Länge mit einem Washcoat beschichtet, der 45 g/L eines handelsüblichen Aluminiumoxids und 5 g/L eines handelsüblichen Ceroxids enthielt.

### Beispiel 2 (nicht erfindungsgemäß)

a) Ein handelsübliches Durchflusssubstrat aus Cordierit der Abmessungen 5,66"×4,00" (14,4 cm × 10,2 cm) mit der Zelligkeit 400 cpsi (62 cells/cm2) und der Wandstärke 6,5 mil (0,17 mm) wurde ausgehend von einem Ende (in den unten beschriebenen Tests einlassseitig) über 50% seiner Länge mit einem Washcoat beschichtet, der 48,23 g/L eines handelsüblichen Lanthan-dotierten Aluminiumoxids, 1,00 g/L Strontiumoxid (ex Sr(OH)₂), 0,47086 g/L einer üblichen wasserlöslichen Pd-Verbindung, sowie 0,23543 g/L einer üblichen wasserlöslichen Pt-Verbindung enthielt. Das Pt:Pd-Gewichtsverhältnis betrug 1:2.
b) Das gemäß a) erhaltene beschichtete Substrat wurde über seine gesamte Länge (d.h. einlassseitig auf die Zone gemäß a), auslassseitig direkt auf das Trägersubstrat) mit einem Washcoat beschichtet, der 49,23 g/L eines , handelsüblichen, Lanthan-dotierten Aluminiumoxids, 1,00 g/L Strontiumoxid (ex Sr(OH)2), 0,47086 g/L einer üblichen wasserlöslichen Pd-Verbindung, sowie 0,23543 g/L einer üblichen wasserlöslichen Pt-Verbindung enthielt. Das Pt:Pd-Gewichtsverhältnis betrug 1:2.
c) In einem weiteren Schritt wurde das gemäß b) erhaltene Substrat ausgehend vom anderen Ende (in den unten beschriebenen Tests auslassseitig) auf 50% seiner Länge, d.h. auf die Zone gemäß a) mit einem Washcoat beschichtet, der 45 g/L eines handelsüblichen Aluminiumoxids und 5 g/L eines handelsüblichen Ceroxids enthielt.

### Beispiel 3

Ein handelsübliches Durchflusssubstrat aus Cordierit der Abmessungen 5,66"×4,00" (14,4 cm × 10,2 cm) mit der Zelligkeit 400 cpsi (62 cells/cm2) und der Wandstärke 6,5 mil (0,17 mm) wurde in drei gleichlange Teile zersägt.

Die drei Teile wurden jeweils über ihre gesamte Länge mit den in Beispiel 1 a), b) und c) genannten Washcoats beschichtet.

Für die unten beschriebenen Tests wurden die drei Substratteile aneinandergefügt und zwar in Richtung des strömenden Abgases in der Reihenfolge:
1. mit Washcoat gemäß Beispiel 1 b) beschichtetes Teil
2. mit Washcoat gemäß Beispiel 1 a) beschichtetes Teil
3. mit Washcoat gemäß Beispiel 1 c) beschichtetes Teil

### Durchführung von Vergleichsversuchen

### a) hydrothermale Ofenalterung

Die Katalysatoren gemäß Beispielen 1 bis 3 und Vergleichsbeispielen 1 bis 3 wurden 16 Stunden bei 750°C gealtert. Die unten beschriebenen Vergleichsversuche wurden soweit nicht anders angegeben mit den derart gealterten Katalysatoren durchgeführt.

b) Bestimmung der NO₂-Bildung und des CO-Umsatzes im Modellgas für alle Messungen gilt:
Raumgeschwindigkeit = 37.500 1/h
Bohrkerndimension 1" × 4" (2,5 × 10,2 cm)
(gebohrt aus den Substraten gemäß Beispielen 1
bis 3 und Vergleichsbeispielen 1 bis 3)
untersuchter Temperaturbereich: 75°C bis 500°C, wobei die Werte bei den Temperaturen 200, 250 und 300°C in den unten stehenden Tabellen dokumentiert sind
Rampe/Aufheizgeschwindigkeit = 15 K/min

Es wurden Versuche mit drei verschiedenen Gaszusammensetzungen durchgeführt:

| Testbedinqunqen | 1 | 2 | 3 |
|---|---|---|---|
| Einheit | [ppm] | [ppm] | [ppm] |
| CO | 350 | 250 | 500 |
| H2 | 116 | 0 | 167 |
| Propen als C3 | 60 | 0 | 200 |
| Propan als C3 | 30 | 0 | 67 |
| Toluol als C7 | 0 | 0 | 8,6 |
| n-Decan als C10 | 0 | 0 | 14 |
| NO | 270 | 750 | 150 |

| Einheit | [%] | [%] | [%] |
|---|---|---|---|
| O2 | 6 | 10 | 13 |
| H2O | 5 | 7,5 | 10 |
| CO2 | 10,7 | 7 | 5 |
| N2 | Rest | Rest | Rest |

Es wurden die folgenden Ergebnisse erhalten:

**Tabelle 1: T₅₀CO und NO₂-Bildung unter Testbedingungen 1**

| Testbedingungen 1 | | | | |
|---|---|---|---|---|
| | T₅₀CO [°C] | NO₂@200°C [%] | NO₂@250°C [%] | NO₂@300°C [%] |
| Beispiel 1 | 150 | 15 | 28 | 44 |
| Vergleichsbeispiel 1 | 149 | 17 | 34 | 49 |
| Vergleichsbeispiel 2 | 155 | 18 | 33 | 50 |
| Vergleichsbeispiel 3 | 152 | 19 | 35 | 55 |
| Beispiel 2 | 151 | 16 | 29 | 45 |
| Beispiel 3 | 153 | 14 | 28 | 41 |

**Tabelle 2: T₅₀CO und NO₂-Bildung unter Testbedingungen 2**

| Testbedingungen 2 | | | | |
|---|---|---|---|---|
| | T₅₀CO [°C] | NO₂@200°C [%] | NO₂@250°C [%] | NO₂@300°C [%] |
| Beispiel 1 | 168 | 15 | 26 | 39 |
| Vergleichsbeispiel 1 | 166 | 18 | 30 | 45 |
| Vergleichsbeispiel 2 | 173 | 16 | 27 | 42 |
| Vergleichsbeispiel 3 | 170 | 19 | 29 | 48 |
| Beispiel 2 | 168 | 14 | 25 | 38 |
| Beispiel 3 | 171 | 4 | 25 | 36 |

**Tabelle 3: T₅₀CO und NO₂-Bildung unter Testbedingungen 3**

| Testbedingungen 3 | | | | |
|---|---|---|---|---|
| | T₅₀CO [°C] | NO₂@200°C [%] | NO₂@250°C [%] | NO₂@300°C [%] |
| Beispiel 1 | 171 | 5 | 16 | 30 |
| Vergleichsbeispiel 1 | 168 | 8 | 22 | 38 |
| Vergleichsbeispiel 2 | 172 | 7 | 19 | 35 |
| Vergleichsbeispiel 3 | 168 | 8 | 20 | 38 |
| Beispiel 2 | 170 | 4 | 14 | 26 |
| Beispiel 3 | 170 | 0 | 15 | 28 |

### c) Bestimmung der NO₂-Bildung und des CO-Umsatzes im Motortest - Light-Off-Test:

Durch Anhebung des Drehmoments bei konstanter Drehzahl des Motors wird eine Erhöhung der Vor-Kat-Temperatur erreicht, der Test verläuft von niedrigen zu hohen Temperaturen, analog der Modellgas-Vorgehensweise. Die Konversion der Schadgase wird mittels AMA-Linien gemessen und errechnet, die NO₂-Bildung wird mittels eines CLD bestimmt.

Es wurden die folgenden Ergebnisse erhalten:

**Tabelle 4: T₅₀CO und NO₂-Bildung am Motor**

| | T₅₀CO [°C] | NO₂max [%] | NO₂@300°C [%] |
|---|---|---|---|
| Beispiel 1 | 157 | 19 | 25 |
| Vergleichsbeispiel 1 | 160 | 23 | 20 |
| Vergleichsbeispiel 2 | 169 | 22 | 17 |
| Vergleichsbeispiel 3 | 160 | 25 | 22 |
| Beispiel 2 | 159 | 33 | 32 |
| Beispiel 3 | 157 | 18 | 15 |

### d) Bestimmung des Heat up-Verhaltens im Motortest (3-Punkte-Heat-Up-Test):

Durch eine geeignete Kombination aus Drehmoment und Drehzahl wird ein stationärer Motorbetriebspunkt angefahren. Dieser wird für eine gewisse Zeit konstant gehalten, anschließend wird über einen sekundären/externen Injektor Diesel-Kraftstoff fein vernebelt vor den Katalysator eingespritzt, welcher den Kraftstoff dann umsetzt und somit eine gewisse Exothermie/Wärme erzeugt, welche mittels im Katalysator verbauter Thermoelemente gemessen wird.

Der Test wird von hohen zu niedrigen Temperaturen gefahren, die Temperaturen sind
1) 280 °C Vor-Kat-Temperatur
2) 270 °C Vor-Kat-Temperatur
3) 260 °C Vor-Kat-Temperatur.

Die Ergebnisse zeigt Figur 1.

### e) Bestimmung der Platin-Migration

Die Katalysatoren gemäß den Beispielen 1 bis 3 bzw. Vergleichsbeispielen 1 bis 3 wurden in frischem Zustand in einer üblichen Synthesegasanlage mit isothermem Reaktor bei einer konstanten Temperatur von 650°C über 18 Stunden mit einem Modellgas folgender Zusammensetzung beaufschlagt:
CO 71 ppm
NO 820 ppm
O₂ 6,3 Vol.-%
CO₂ 8,9 Vol.-%
H₂O 11 Vol.-% bei den 18 Stunden dauernden Messungen und 5 Vol.-% bei den 60 Stunden dauernden Messungen
N2 Balance

Das abströmseitig den jeweiligen Katalysator verlassende Gas wurde durch ein mit einem SCR Katalysator vom Eisen-ß-Zeolith-Typ beschichtetes Durchflusssubstrat der Länge 2" (5,1 cm) geführt.

Sodann wurde für jeden Katalysator die Menge des im SCR-Katalysator gebundenen Platins bestimmt. Dazu wurde ein Bohrkern des Katalysators in einem Tiegel mittels NiS-Dokimasie ausgeschmolzen und schließlich das Platin mittels ICP-OES bestimmt.

Es wurden die folgenden Ergebnisse erhalten:

| | Menge an Platin [ppm] |
|---|---|
| Beispiel 1 | 1,2 |
| Vergleichsbeispiel 1 | 3,0 |
| Vergleichsbeispiel 2 | 0,3 |
| Vergleichsbeispiel 3 | 0,9 |
| Beispiel 2 | 0,4 |
| Beispiel 3 | 0,4 |

## Patentansprüche

1. Dieseloxidationskatalysator, umfassend
einen Tragkörper mit einer Länge L, die sich zwischen einer ersten Stirnfläche a und einer zweiten Stirnfläche b erstreckt und
auf dem Tragkörper angeordnete katalytisch aktive Materialzonen A, B und C, wobei
- Materialzone A Platin und Palladium in einem Gewichtsverhältnis Pt:Pd von ≤ 1 und ein Erdalkalimetall enthält und sich ausgehend von Stirnfläche a auf 20 bis 80% der Länge L erstreckt,
- Materialzone B Ceroxid enthält und frei von Platin ist und sich ausgehend von Stirnfläche b auf 20 bis 80% der Länge L erstreckt, und
- Materialzone C Platin oder Platin und Palladium in einem Gewichtsverhältnis Pt:Pd von ≥ 5 enthält, und
wobei weder Materialzone A, noch Materialzone C über Materialzone B angeordnet sind.

2. Dieseloxidationskatalysator gemäß Anspruch 1, **dadurch gekennzeichnet, dass** in den Materialzonen A und C Palladium, Platin beziehungsweise Platin und Palladium auf einem Trägeroxid vorliegen.

3. Dieseloxidationskatalysator gemäß Anspruch 1 und/oder 2, **dadurch gekennzeichnet, dass** die Trägeroxide in den Materialzonen A und C gleich oder verschieden voneinander sind und ausgewählt sind aus der Reihe bestehend aus Aluminiumoxid, dotiertes Aluminiumoxid, Siliziumoxid, Titandioxid und Mischoxiden aus einem oder mehreren davon.

4. Dieseloxidationskatalysator gemäß einem oder mehreren der Ansprüche 1 bis 3, **dadurch gekennzeichnet, dass** das Erdalkalimetall in Materialzone A in einer Menge von 0,5 bis 5 Gew.-%, bezogen auf das Gewicht der Materialzone A, vorliegt.

5. Dieseloxidationskatalysator gemäß einem oder mehreren der Ansprüche 1 bis 4, **dadurch gekennzeichnet, dass** das Erdalkalimetall in Materialzone A Strontium oder Barium oder Strontium und Barium ist.

6. Dieseloxidationskatalysator gemäß einem oder mehreren der Ansprüche 1 bis 5, **dadurch gekennzeichnet, dass** die Materialzone B Palladium enthält.

7. Dieseloxidationskatalysator gemäß Anspruch 6, **dadurch gekennzeichnet, dass** Materialzone B Palladium in einer Menge von 0,01 bis 5 Gew.-%, bezogen auf das Gewicht der Materialzone B, enthält.

8. Dieseloxidationskatalysator gemäß einem oder mehreren der Ansprüche 1 bis 7, **dadurch gekennzeichnet, dass** sich Materialzone C über die gesamte Länge L des Tragkörpers erstreckt.

9. Dieseloxidationskatalysator gemäß einem oder mehreren der Ansprüche 1 bis 8, **dadurch gekennzeichnet, dass** die Materialzonen A und B auf Materialzone C angeordnet sind.

10. Dieseloxidationskatalysator gemäß einem oder mehreren der Ansprüche 1 bis 8, **dadurch gekennzeichnet, dass** Materialzone C auf Materialzone A und Materialzone B auf Materialzone C angeordnet sind.

11. Dieseloxidationskatalysator gemäß einem oder mehreren der Ansprüche 1 bis 10, **dadurch gekennzeichnet, dass** sich die Materialzonen A und B jeweils auf 50% und Materialzone C auf 100% der Länge L des Tragkörpers erstrecken.

12. Verfahren zur Behandlung von Dieselabgasen, **dadurch gekennzeichnet, dass** das Dieselabgas über einen Dieseloxidationskatalysator gemäß einem oder mehreren der Ansprüche 1 bis 11 geleitet wird, wobei das Dieselabgas den bei Stirnfläche a in den Tragkörper ein- und bei Stirnfläche b aus dem Tragkörper ausfließt.

13. Vorrichtung zur Reinigung der Abgase von Dieselmotoren, die einen Dieseloxidationskatalysator nach einem der Ansprüche 1 bis 11 aufweist.

14. Vorrichtung nach Anspruch 13, **dadurch gekennzeichnet, dass** der Dieseloxidationskatalysator nach einem der Ansprüche 1 bis 11 einem Dieselpartikelfilter und/oder einem Katalysator zur selektiven katalytischen Reduktion von Stickoxiden vorgeschaltet ist.

## Claims

1. A diesel oxidation catalyst, comprising
a carrier body having a length L extending between a first end face a and a second end face b, and
catalytically active material zones A, B and C arranged on the carrier body, wherein
- material zone A contains platinum and palladium in a weight ratio Pt:Pd of ≤ 1 and an alkaline earth metal and extends from end face a to 20 to 80% of length L,
- material zone B contains cerium oxide and is free of platinum and extends from end face b to 20 to 80% of length L, and
- material zone C contains platinum or platinum and palladium in a weight ratio Pt:Pd of ≥ 5, and
neither material zone A nor material zone C are arranged above material zone B.

2. The diesel oxidation catalyst according to claim 1, **characterized in that,** in the material zones A and C, palladium, platinum or platinum and palladium are present on a carrier oxide.

3. The diesel oxidation catalyst according to claim 1 and/or 2, **characterized in that** the carrier oxides in material zones A and C are identical or different from one another and are selected from the group consisting of aluminum oxide, doped aluminum oxide, silicon oxide, titanium dioxide and mixed oxides of one or more thereof.

4. The diesel oxidation catalyst according to any one or more of claims 1 to 3, **characterized in that** the alkaline earth metal in material zone A is present in an amount of 0.5 to 5% by weight relative to the weight of material zone A.

5. The diesel oxidation catalyst according to any one or more of claims 1 to 4, **characterized in that** the alkaline earth metal in material zone A is strontium or barium or strontium and barium.

6. The diesel oxidation catalyst according to any one or more of claims 1 to 5, **characterized in that** material zone B contains palladium.

7. The diesel oxidation catalyst according to claim 6, **characterized in that** material zone B contains palladium in an amount of 0.01 to 5% by weight relative to the weight of material zone B.

8. The diesel oxidation catalyst according to any one or more of claims 1 to 7, **characterized in that** material zone C extends over the entire length L of the carrier body.

9. The diesel oxidation catalyst according to any one or more of claims 1 to 8, **characterized in that** material zones A and B are arranged on material zone C.

10. The diesel oxidation catalyst according to any one or more of claims 1 to 8, **characterized in that** material zone C is arranged on material zone A and material zone B is arranged on material zone C.

11. The diesel oxidation catalyst according to any one or more of claims 1 to 10, **characterized in that** material zones A and B each extend to 50% and material zone C to 100% of the length L of the carrier body.

12. A method for treating diesel exhaust gases, **characterized in that** the diesel exhaust gas is conducted through a diesel oxidation catalyst according to any one or more of claims 1 to 11, wherein the diesel exhaust gas the flows into the carrier body at the end face a and flows out of the carrier body at the end face b.

13. A device for purifying the exhaust gases from diesel engines, having a diesel oxidation catalyst according to any one of claims 1 to 11.

14. The device according to claim 13, **characterized in that** the diesel oxidation catalyst according to any one of claims 1 to 11 is arranged upstream of a diesel particulate filter and/or a catalyst for the selective catalytic reduction of nitrogen oxides.

## Revendications

1. Catalyseur d'oxydation pour moteur diesel, comprenant
un corps de support comportant une longueur L qui s'étend entre une première face frontale a et une seconde face frontale b et
des zones de matériau A, B et C catalytiquement actives disposées sur le corps de support,
- la zone de matériau A contenant du platine et du palladium dans un rapport pondéral Pt:Pd ≤ 1 et un métal alcalino-terreux et s'étendant à partir de la face frontale a sur 20 à 80 % de la longueur L,
- la zone de matériau B contenant de l'oxyde de cérium et étant exempte de platine et s'étendant à partir de la face frontale b sur 20 à 80 % de la longueur L ; et
- la zone de matériau C contenant du platine ou du platine et du palladium dans un rapport pondéral Pt:Pd ≥ 5, et
ni la zone de matériau A, ni la zone de matériau C n'étant disposée au-dessus de la zone de matériau B.

2. Catalyseur d'oxydation pour moteur diesel selon la revendication 1, **caractérisé en ce que,** dans les zones de matériau A et C, du palladium, du platine ou du platine et du palladium sont présents sur un oxyde de support.

3. Catalyseur d'oxydation pour moteur diesel selon les revendications 1 et/ou 2, **caractérisé en ce que** les oxydes de support dans les zones de matériau A et C sont identiques ou différents l'un de l'autre et sont choisis dans la série constituée par l'oxyde d'aluminium, l'oxyde d'aluminium dopé, l'oxyde de silicium, le dioxyde de titane et des oxydes mixtes d'un ou de plusieurs de ceux-ci.

4. Catalyseur d'oxydation pour moteur diesel selon l'une ou plusieurs des revendications 1 à 3, **caractérisé en ce que** le métal alcalino-terreux dans la zone de matériau A est présent en une quantité de 0,5 à 5 % en poids par rapport au poids de la zone de matériau A.

5. Catalyseur d'oxydation pour moteur diesel selon l'une ou plusieurs des revendications 1 à 4, **caractérisé en ce que** le métal alcalino-terreux dans la zone de matériau A est le strontium ou le baryum ou le strontium et le baryum.

6. Catalyseur d'oxydation pour moteur diesel selon l'une ou plusieurs des revendications 1 à 5, **caractérisé en ce que** la zone de matériau B contient du palladium.

7. Catalyseur d'oxydation pour moteur diesel selon la revendication 6, **caractérisé en ce que** la zone de matériau B contient du palladium en une quantité de 0,01 à 5 % en poids par rapport au poids de la zone de matériau B.

8. Catalyseur d'oxydation pour moteur diesel selon l'une ou plusieurs des revendications 1 à 7, **caractérisé en ce que** la zone de matériau C s'étend sur la longueur L totale du corps de support.

9. Catalyseur d'oxydation pour moteur diesel selon l'une ou plusieurs des revendications 1 à 8, **caractérisé en ce que** les zones de matériau A et B sont disposées sur la zone de matériau C.

10. Catalyseur d'oxydation pour moteur diesel selon l'une ou plusieurs des revendications 1 à 8, **caractérisé en ce que** la zone de matériau C est disposée sur la zone de matériau A et la zone de matériau B est disposée sur la zone de matériau C.

11. Catalyseur d'oxydation pour moteur diesel selon l'une ou plusieurs des revendications 1 à 10, **caractérisé en ce que** les zones de matériau A et B s'étendent respectivement sur 50 % de la longueur L du corps de support et la zone de matériau C s'étend sur 100 % de la longueur L du corps de support.

12. Procédé permettant le traitement de gaz d'échappement de moteur diesel, **caractérisé en ce que** le gaz d'échappement de moteur diesel est acheminé par l'intermédiaire d'un catalyseur d'oxydation pour moteur diesel selon l'une ou plusieurs des revendications 1 à 11, le gaz d'échappement de moteur diesel entrant dans le corps de support au niveau de la face frontale a et sortant du corps de support au niveau de la face frontale b.

13. Dispositif permettant le nettoyage des gaz d'échappement de moteurs diesel, lequel présente un catalyseur d'oxydation pour moteur diesel selon l'une quelconque des revendications 1 à 11.

14. Dispositif selon la revendication 13, **caractérisé en ce que** le catalyseur d'oxydation pour moteur diesel selon l'une quelconque des revendications 1 à 11 est monté en amont d'un filtre à particules pour moteur diesel et/ou d'un catalyseur permettant la réduction catalytique sélective d'oxydes d'azote.
